(19) Europäisches Patentamt
European Patent Office
Office européen des brevets

(11) **EP 2 497 555 B1**

(12) **FASCICULE DE BREVET EUROPEEN**

(45) Date de publication et mention
de la délivrance du brevet:
**28.08.2013 Bulletin 2013/35**

(51) Int Cl.:
*A63H 30/04* (2006.01)        *A63H 27/133* (2006.01)
*G08C 17/02* (2006.01)        *G05B 13/02* (2006.01)
*B64C 39/02* (2006.01)        *B64C 27/04* (2006.01)
*G05D 1/02* (2006.01)

(21) Numéro de dépôt: **12155240.0**

(22) Date de dépôt: **13.02.2012**

(54) **Procédé de pilotage suivant un virage curviligne d'un drone à voilure tournante à rotors multiples.**

Verfahren zum Steuern einer einem Kurvenflug folgenden Drohne mit Drehflügeln und mehreren Rotoren

Method for piloting a rotary-wing drone with multiple rotors with curved steering.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2011 FR 1151904**

(43) Date de publication de la demande:
**12.09.2012 Bulletin 2012/37**

(73) Titulaire: **Parrot**
**75010 Paris (FR)**

(72) Inventeurs:
• **D'Haeyer, Frédéric**
**77500 Chelles (FR)**
• **Rischmuller, Michael**
**13090 Aix-en-Provence (FR)**

(74) Mandataire: **Dupuis-Latour, Dominique**
**Bardehle Pagenberg**
**10, boulevard Haussmann**
**75009 Paris (FR)**

(56) Documents cités:
WO-A2-2010/061099        FR-A1- 2 927 262
JP-A- 2006 312 344        US-A1- 2004 245 378

**Description**

L'invention concerne le pilotage des drones à voilure tournante tels que les quadricoptères et analogues.

Ces drones sont pourvus de rotors multiples entraînés par des moteurs respectifs commandables de manière différenciée afin de piloter le drone en attitude et en vitesse.

Un exemple typique d'un tel drone est le *AR.Drone* de Parrot SA, Paris, France, qui est un quadricoptère équipé d'une série de capteurs (accéléromètres, gyromètres trois axes, altimètre). Le drone est également pourvu d'une caméra frontale captant une image de la scène vers laquelle est dirigé le drone, ainsi que d'une caméra de visée verticale captant une image du terrain survolé.

Ce drone est piloté par l'utilisateur au moyen d'un dispositif de télécommande déportée - ci-après désigné "appareil" - relié au drone par une liaison radio.

Le WO 2010/061099 A2 (Parrot SA) décrit en particulier un tel drone et son principe de pilotage par l'intermédiaire d'un téléphone ou baladeur multimédia à écran tactile et accéléromètre intégré, par exemple un téléphone cellulaire de type *iPhone* ou un baladeur ou une tablette multimédia de type *iPod Touch* ou *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). En particulier, l'appareil est pourvu d'un écran tactile affichant l'image captée par la caméra frontale, avec en superposition un certain nombre de symboles permettant l'activation de commandes par simple contact du doigt de l'utilisateur sur l'écran tactile. Cet affichage permet en outre un "pilotage immersif" où l'utilisateur, au lieu de piloter le drone en regardant celui-ci, utilise l'image de la caméra de la même façon que s'il se trouvait à bord du drone.

Le drone peut être utilisé pour des jeux de course consistant à effectuer un parcours délimité à la manière d'un slalom par des plots ou des portes simples ou doubles, une ligne d'arrivée. Le WO 2008/056049 A1 (Parrot) décrit un tel jeu de course de quadricoptère, consistant à effectuer des tours d'un circuit défini par des pylônes et des anneaux virtuels au travers desquels le joueur devra faire passer son quadricoptère.

Pour gagner la course, il est indispensable d'aller vite. Et pour gagner du temps, il est nécessaire de virer autour des plots au plus près de ceux-ci et en conservant un maximum d'énergie cinétique, donc avec une vitesse relativement importante.

Il en est de même si le jeu implique des manoeuvres de demi-tour, des figures en huit, etc.

Avec les quadricoptères actuels, ces manoeuvres nécessitent habileté et expérience de l'utilisateur, en raison du mode de pilotage qui oblige celui-ci à combiner plusieurs commandes pour réaliser ces figures.

Plus précisément, le drone est piloté directement par l'utilisateur au moyen d'une combinaison :

- d'une part, de signaux émis par le détecteur d'inclinaison de l'appareil:

    par exemple, pour faire avancer le drone l'utilisateur incline son appareil selon l'axe de tangage correspondant, et pour déporter le drone à droite ou à gauche il incline ce même appareil par rapport à l'axe de roulis ; et

- d'autre part, de commandes disponibles sur l'écran tactile, notamment "montée/descente" (correspondant à une commande des gaz) et "rotation à droite/rotation à gauche" (pivotement du drone autour d'un axe de lacet).

Ainsi, si les moteurs sont commandés de manière que le drone s'incline ou "plonge" vers le bas (inclinaison suivant un angle de tangage), alors il va progresser vers l'avant avec une vitesse d'autant plus élevée que l'inclinaison sera importante ; inversement s'il se "cabre" dans le sens opposé, sa vitesse va progressivement ralentir puis s'inverser en repartant vers l'arrière. De la même façon, une inclinaison suivant un axe de roulis (le drone penche à droite ou à gauche) va provoquer un déplacement linéaire du drone en translation horizontale vers la droite ou vers la gauche.

Ce type de contrôle de la vitesse horizontale, dans les deux directions avant/arrière et gauche/droite, uniquement par action sur la vitesse de rotation des quatre moteurs est caractéristique d'un quadricoptère.

Il se distingue notamment des systèmes de contrôle de la vitesse d'autres types d'aéronefs (avion, hélicoptère mono- ou birotor) tels que ceux décrits par exemple dans les JP 2006 312344 A ou US 2004/245378 A1, qui mettent en oeuvre des servomécanismes de commande mécanique de la position d'ailerons ou de gouvernes de direction, ou de commande du pas cyclique d'un rotor d'hélicoptère pour créer une modification de l'angle d'incidence des pales permettant de créer une composante de vitesse horizontale.

Le drone décrit par le WO 2010/061099 A2 précité est également pourvu d'une commande de passage en point fixe (stabilisation automatique) : lorsque l'utilisateur lâche toutes les commandes de son appareil de télécommande, le drone s'immobilise et se maintient au point fixe de façon entièrement automatique.

Avec les commandes dont il dispose, l'utilisateur contrôlera la trajectoire du drone en combinant des mouvements (i) de translation en XY (avant-arrière/droite-gauche), par une inclinaison commandée du drone suivant ses axes de tangage et de roulis et (ii) de pivotement, par une rotation commandée du drone autour de son axe de lacet. On fera ici abstraction de la commande d'altitude (montée/descente), et on supposera que le drone parcourt une trajectoire à altitude constante.

Ces deux types de déplacement (translations XY et pivotement) peuvent être réalisés simultanément, mais requièrent pour cela un certain doigté. Un utilisateur novice aura de ce fait tendance à dissocier les commandes, en : pilotant le drone en XY avec son doigt gauche et en inclinant l'appareil ; puis en le laissant passer en point fixe en relâchant le doigt ; puis en utilisant le contrôle de rotation par déplacement du doigt droit pour changer de direction (et donc faire tourner le repère XY lié au drone); puis en poursuivant le pilotage en XY suivant une autre direction, etc.

Cette première manière de procéder (par commandes dissociées) ne permet pas un pilotage rapide.

Une autre manière de procéder consiste à piloter le drone uniquement en XY suivant le parcours imposé. Mais dans ce cas la caméra frontale du drone ne sera pas dirigée dans la direction de progression du drone, et le retour visuel sur l'écran de l'appareil ne pourra donc pas être utilisé pour le pilotage.

En tout état de cause, même avec un pilotage par des commandes simultanées et combinées, un virage rapide et serré crée une force centrifuge non négligeable qu'il est pratiquement impossible, même pour un utilisateur expérimenté, de percevoir et de compenser dès que la vitesse dépasse un certain niveau - d'où un risque important de dérapage ou de survirage du drone avec pour conséquence un écart par rapport à la trajectoire du circuit de course.

Pour réaliser un virage avec des commandes combinées, l'utilisateur doit en effet contrôler simultanément trois degrés de liberté de l'appareil : appui du doigt gauche sur l'écran avec basculement de l'appareil selon ses deux axes (pour la commande en roulis et en tangage du drone), et d'autre part déplacement latéral du doigt droit (pour la commande en lacet du drone) - en faisant abstraction d'une éventuelle commande de montée/descente.

L'un des buts de l'invention est d'apporter une solution à cette série de difficultés, en proposant un nouveau mode de contrôle du drone qui permettre de commander des trajectoires en virage typiques d'un circuit de course :

- selon une forte courbure, et avec une vitesse élevée;
- en compensant les risques de dérapage ou de survirage par une inclinaison contrôlée du drone (à la manière d'une moto qui s'incline dans les virages) ; et
- en maintenant à tout moment l'axe de la caméra frontale alignée sur la direction de déplacement du drone.

Un autre but de l'invention est de mettre à la disposition de l'utilisateur un tel mode de pilotage - ci-après désigné "pilotage en lacet combiné" - à la fois :

- par une manoeuvre simple de basculement vers ce mode particulier ;
- par une réduction du nombre de degrés de liberté à contrôler par l'utilisateur par rapport à un pilotage à commandes combinées,
- tout en conservant donc des possibilités d'actions fines sur l'attitude du drone, son altitude, etc.

L'invention a pour objet un procédé de pilotage du type divulgué notamment par les JP 2006 312344 A ou US 2004/245378 A1 précités, c'est-à-dire comprenant les étapes suivantes :

a) par un appareil de télécommande, production d'une commande de virage selon une trajectoire curviligne,
b) par le drone, i) réception de ladite commande et ii) acquisition de mesures instantanées des composantes de la vitesse linéaire, des angles d'inclinaison et des vitesses angulaires du drone ; et
c) à partir de la commande reçue et des mesures acquises à l'étape b), génération de valeurs de consigne d'une boucle de contrôle du drone, ces valeurs de consigne contrôlant la vitesse linéaire horizontale et l'inclinaison du drone par rapport à un repère lié au sol de manière à faire parcourir au drone ladite trajectoire curviligne avec une vitesse tangentielle prédéterminée.

Toutefois, les JP 2006 312344 A ou US 2004/245378 A1 divulguent un système de contrôle automatique de vol dans lequel l'aéronef (un hélicoptère monorotor) est piloté de manière à suivre une trajectoire-cible prédéterminée par asservissement de position avec comparaison de la trajectoire réellement suivie par rapport à la trajectoire de consigne.

L'invention propose un autre type de commande des paramètres de vol, spécifique à un drone de type quadricoptère, où l'utilisateur agit en temps réel en contrôlant un unique paramètre, désigné "taux de virage", essentiellement lié au rayon plus ou moins grand de la trajectoire circulaire.

Le pilotage du drone s'apparente alors à celui d'une moto, où pour aborder un virage et suivre la courbe de celui-ci le pilote penche plus ou moins son engin et adapte cette inclinaison en temps réel.

Dans une version plus complète, on laissera en outre à l'utilisateur la maîtrise de la vitesse à laquelle le drone parcourt cette trajectoire circulaire, donc avec un deuxième degré de liberté.

Avec l'analogie ci-dessus, ceci correspond à la faculté qu'a le motard de réduire ou remettre les gaz en cours de virage.

Plus précisément, de façon caractéristique, l'invention propose un procédé dans lequel : le drone est un drone de type quadricoptère à rotors multiples coplanaires entraînés par des moteurs respectifs ; la boucle de contrôle contrôle la vitesse linéaire horizontale et l'inclinaison du drone par action différenciée sur la vitesse de rotation desdits moteurs ; et ladite commande est une commande de taux de virage comprenant un paramètre de sens du virage, à droite ou à gauche, et un paramètre définissant une consigne de rayon de courbure instantané pour ce virage.

La trajectoire curviligne peut être une trajectoire circulaire, parcourue à rayon de courbure constant, et la vitesse tangentielle prédéterminée peut être une vitesse constante.

De préférence, les valeurs de consigne générées à l'étape c) contrôlent les moteurs du drone de manière à maintenir constante l'altitude du drone par rapport au sol.

Très avantageusement, les valeurs de consigne générées à l'étape c) contrôlent la vitesse linéaire horizontale et l'inclinaison du drone de manière à maintenir une vitesse radiale nulle du drone par rapport à la trajectoire circulaire, de façon à compenser tout dérapage ou survirage du drone lorsqu'il parcourt cette trajectoire.

La commande de virage peut en particulier être produite par un appareil de télécommande comprenant : un écran tactile ; des moyens aptes à i) détecter un contact d'au moins un doigt d'un utilisateur sur la surface de l'écran, ii) déterminer la position du ou des points de contact, et iii) produire des commandes de pilotage correspondantes, incluant la commande de virage selon une trajectoire curviligne ; et des moyens de transmission sans fil de données, aptes à émettre des commandes à destination du drone.

Dans ce cas, la production de la commande de virage selon une trajectoire curviligne est avantageusement déclenchée sur détection du contact simultané de deux doigts de l'utilisateur sur l'écran tactile, et produite pendant toute la durée du contact simultané des deux doigts, jusqu'à détection d'une perte de ce contact simultané.

Par ailleurs, si l'appareil de télécommande comprend en outre un détecteur d'inclinaisons selon l'un et/ou l'autre de ses axes de tangage et/ou de roulis, la commande de virage selon une trajectoire curviligne est avantageusement produite i) en fonction du sens de l'inclinaison, à droite ou à gauche, de l'appareil par rapport à son axe de roulis, pour déterminer le paramètre de sens du virage à droite ou à gauche, et ii) en fonction de l'amplitude de l'inclinaison de l'appareil par rapport à son axe de roulis, pour déterminer le paramètre définissant le rayon de courbure du virage. La commande de virage peut être également produite en fonction de l'amplitude de l'inclinaison de l'appareil par rapport à son axe de tangage, pour déterminer un paramètre de vitesse tangentielle.

Avantageusement, si la trajectoire suivie lors d'une commande de virage selon une trajectoire curviligne comprend une composante de vitesse radiale, la commande de virage est produite également en fonction de l'amplitude de l'inclinaison du drone par rapport à son axe de tangage de manière à annuler cette composante de vitesse radiale.

En tout état de cause, il peut être prévu le cas échéant la limitation du rayon de courbure de la trajectoire à une valeur minimale prédéterminée. Le procédé peut prévoir à l'étape a) la production d'une commande de demi-tour du drone ; à l'étape c) il est alors mis fin au parcours du drone suivant la trajectoire curviligne lorsque les mesures acquises à l'étape b) indiquent une rotation du drone à 180° autour de son axe de lacet. L'invention vise également un logiciel, téléchargeable pour partie dans une mémoire numérique d'un drone à voilure tournante et pour partie dans celle d'un appareil de télécommande, comprenant des instructions qui, lorsqu'elles sont exécutées, mettent en oeuvre un procédé tel que ci-dessus pour le pilotage du drone en virage selon une trajectoire curviligne.

On va maintenant décrire un exemple de mise en oeuvre du procédé de l'invention, en référence aux dessins annexés où les mêmes références numériques désignent d'une figure à l'autre des éléments identiques ou fonctionnellement semblables.

La Figure 1 est une vue d'ensemble montrant le drone et la télécommande associée permettant son pilotage à distance.

Les Figures 2a et 2b illustrent les mouvements du drone qu'il est possible de commander par des rotations respectivement autour de ses axes de lacet, et de tangage et roulis.

La Figure 3 illustre schématiquement le déplacement du drone dans un mouvement de rotation circulaire correspondant au mode de pilotage à lacet combiné selon l'invention.

La Figure 4 illustre schématiquement un exemple de circuit de course qu'il est aisé de parcourir lorsque le mode de pilotage en lacet combiné est activé.

La Figure 5 est un exemple montrant les différentes images et symboles affichés sur l'écran de l'appareil de télécommande.

La Figure 6 est une vue de dessus montrant les divers axes de référence du drone lors d'un mouvement circulaire correspondant au pilotage en lacet combiné.

La Figure 7 est un schéma par blocs des différents organes de contrôle, d'asservissement et de pilotage assisté du drone.

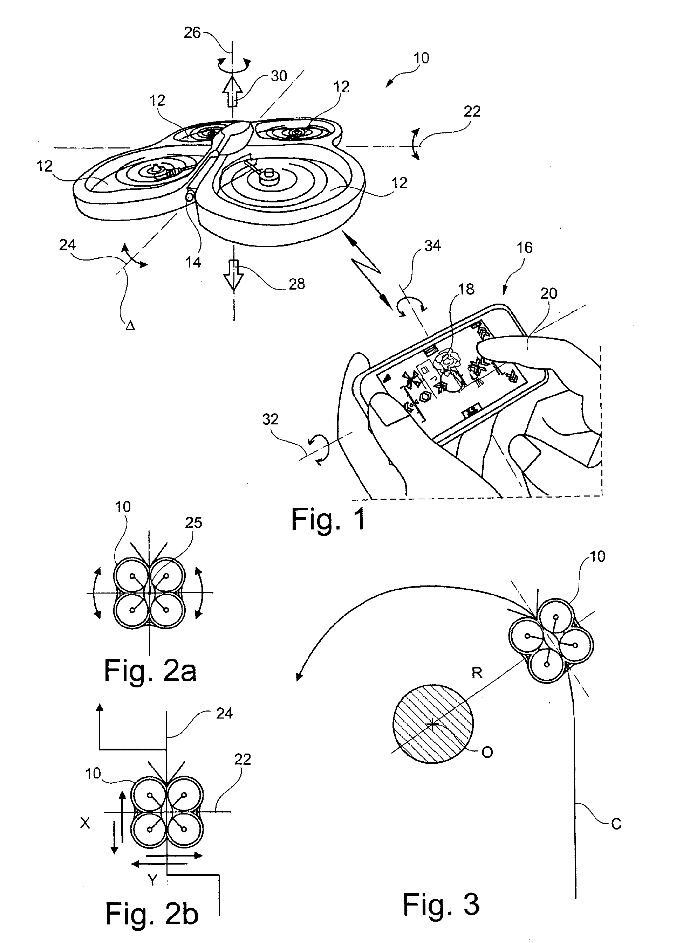

On va maintenant décrire un exemple de mise en oeuvre de l'invention. Sur la Figure 1, la référence 10 désigne de façon générale un drone, qui est par exemple un quadricoptère tel que le modèle *AR.Drone* de Parrot SA, Paris, France, décrit notamment dans le WO 2010/061099 A2 précité, ainsi que dans les WO 2009/109711 A2 (qui décrit un exemple de système de stabilisation automatique à partir des informations fournies par un altimètre et une caméra à visée frontale) et FR 2 915 569 A1 (qui décrit notamment le système de contrôle avec gyromètres et accéléromètres utilisé par le drone).

Le drone 10 comporte quatre rotors coplanaires 12 dont les moteurs sont pilotés indépendamment par un système intégré de navigation et de contrôle d'attitude. Il est pourvu d'une première caméra 14 à visée frontale permettant d'obtenir une image de la scène vers laquelle se dirige le drone, par exemple une caméra grand angle à capteur CMOS de résolution VGA (640×480 pixels) et de fréquence de rafraîchissement du flux vidéo de 15 fps (images par seconde). Le drone comporte également une seconde caméra à visée verticale (non représentée) pointant vers le bas, apte à capter des images successives du terrain survolé et utilisée notamment pour évaluer la vitesse du drone par rapport au sol.

Des capteurs inertiels (accéléromètres et gyromètres) permettent de mesurer avec une certaine précision les vitesses angulaires et les angles d'attitude du drone, c'est-à-dire les angles d'Euler décrivant l'inclinaison du drone par rapport à un repère terrestre absolu. De façon générale, par "inclinaison", on entendra l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis.

Un télémètre à ultrasons disposé sous le drone fournit par ailleurs une mesure de l'altitude par rapport au sol.

En ce qui concerne la vitesse linéaire dans le plan horizontal (vitesse de translation du drone, représentée par les deux composantes orthogonales longitudinale et transversale précitées, considérées dans un plan horizontal d'un repère terrestre), cette vitesse est évaluée par analyse de l'image fournie par la caméra à visée verticale du drone en combinaison avec les données accélérométriques, grâce à un logiciel qui estime le déplacement de la scène captée par la caméra d'une image à la suivante et applique à ce déplacement estimé un facteur d'échelle fonction de l'altitude mesurée. Divers algorithmes permettent de déterminer en temps réel cette vitesse horizontale avec une très bonne précision, aussi bien pour des valeurs proches de la vitesse maximale du drone, de l'ordre de 10 m/s, que pour des valeurs très faibles.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu à cet effet de moyens de liaison radio avec le drone permettant l'échange bidirectionnel de données du drone 10 vers l'appareil 16, notamment pour la transmission de l'image captée par la caméra 14, et de l'appareil 16 vers le drone 10 pour l'envoi de commandes de pilotage. Cette liaison radio peut être par exemple de type réseau local *Wi-Fi* (IEEE 802.11) ou *Bluetooth* (marques déposées). L'appareil de télécommande 16 est également pourvu de capteurs d'inclinaison permettant de contrôler l'attitude du drone en imprimant à l'appareil des inclinaisons correspondantes selon des axes de roulis et de tangage (on pourra se référer au WO 2010/061099 A2 précité pour plus de détails sur ces aspects du système).

Comme indiqué en introduction, l'appareil de télécommande 16 est avantageusement constitué par un téléphone ou baladeur multimedia à écran tactile et accéléromètre intégré, par exemple un téléphone cellulaire de type *iPhone,* un baladeur de type *iPod Touch* ou une tablette multimédia de type *iPad,* qui sont des appareils incorporant les divers organes de contrôle nécessaires à l'affichage et à la détection des commandes de pilotage, à la visualisation de l'image captée par la caméra frontale, et à l'échange bidirectionnel de données avec le drone par liaison *Wi-Fi* ou *Bluetooth.*

Le pilotage du drone 10 consiste à faire évoluer celui-ci par:

a) rotation autour d'un axe de tangage 22, pour le faire avancer ou reculer (déplacement illustré en X Figure 2b) ; et/ou
b) rotation autour d'un axe de roulis 24, pour le décaler vers la droite ou vers la gauche (déplacement illustré en Y Figure 2b) ; et/ou
c) rotation autour d'un axe de lacet 26, pour faire pivoter vers la droite ou vers la gauche l'axe principal du drone, donc la direction Δ de pointage de la caméra frontale (déplacement illustré Figure 2a) ; et/ou
d) translation vers le bas 28 ou vers le haut 30 par changement du régime des gaz, de manière à respectivement réduire ou augmenter l'altitude du drone.

Lorsque ces commandes de pilotage sont appliquées directement par l'utilisateur à partir de l'appareil de télécommande 16, les commandes a) et b) de pivotement autour des axes de tangage 22 et de roulis 24 sont obtenues de façon intuitive par des inclinaisons de l'appareil 16 respectivement autour de son axe longitudinal 32 et de son axe transversal 34 : par exemple, pour faire avancer le drone il suffit d'incliner l'appareil vers l'avant en le penchant autour de l'axe 32, pour le déporter à droite il suffit d'incliner l'appareil en le penchant autour de l'axe 34 vers la droite, etc. Les commandes c) et d), quant à elles, résultent d'actions appliquées par contact du doigt 20 de l'utilisateur (généralement

EP 2 497 555 B1

le doigt droit) sur des zones spécifiques correspondantes de l'écran tactile 18.

Le drone possède également un système automatique et autonome de stabilisation en vol stationnaire, correspondant à un mode autopiloté activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et maintenu dans cette position fixe par le système de pilotage automatique et de stabilisation, sans aucune intervention de l'utilisateur.

Le problème de l'invention consiste à trouver un mode de pilotage contrôlé permettant de passer :

- d'un pilotage conventionnel, par commandes combinées ou dissociées à partir des différentes commandes que l'on vient d'exposer- imposant donc trois degrés de liberté (en supposant l'altitude constante) correspondant aux mouvements de pivotement, et de translation en X et en Y, illustrés Figures 2a et 2b, à
- un pilotage selon un mode qui sera désigné "en lacet combiné", consistant à faire effectuer au drone, comme illustré Figure 3, un mouvement de rotation suivant une trajectoire C circulaire de rayon R autour d'un centre O, avec une vitesse curviligne déterminée (constante ou non) et une altitude constante.

Dans une version simplifiée, cette vitesse curviligne sera constante, c'est-à-dire que l'utilisateur n'aura qu'un seul degré de liberté à maîtriser, désigné "taux de virage", paramètre essentiellement lié au rayon plus ou moins grand de la trajectoire circulaire. Dans une version plus complète, on laissera en outre à l'utilisateur la maîtrise de la vitesse à laquelle le drone parcourt cette trajectoire circulaire, donc avec un deuxième degré de liberté.

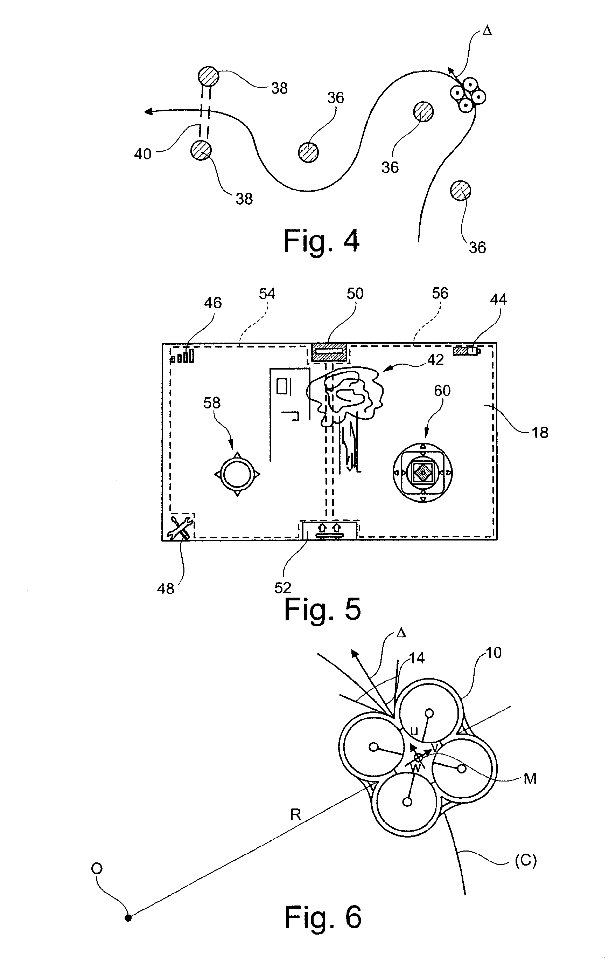

Le pilotage en lacet combiné est particulièrement adapté à des parcours sinueux tels que celui du circuit imposé illustré Figure 4, où le drone doit enchaîner à un rythme soutenu des virages à droite et à gauche en slalom sur un circuit défini par des portes simples 36 ou doubles 38 jusqu'à une ligne d'arrivée 40, à la vitesse la plus élevée possible.

La Figure 5 illustre les différentes images et symboles affichés sur l'écran 18 de l'appareil de télécommande.

L'écran 18 reproduit la scène 42 captée par la caméra frontale 14 du drone, avec affichés en superposition sur cette image un certain nombre de symboles 44 à 60 donnant des informations sur le fonctionnement du drone et permettant par activation tactile le déclenchement et l'envoi par l'utilisateur de commandes de pilotage.

L'appareil affiche ainsi en 44 des informations concernant l'état de la batterie du drone, en 46 le niveau du signal de la liaison entre l'appareil et le drone, et en 48 l'accès à un menu de réglage. L'écran affiche également une commande d'atterrissage d'urgence 50 et une commande de décollage automatique 52.

En ce qui concerne les commandes de pilotage par l'utilisateur, une partie de ces commandes est disponible à la main droite et l'autre partie à la main gauche. Dans l'exemple illustré, un doigt de la main droite est utilisé pour la commande en lacet et la commande de montée/descente, et un doigt de la main gauche est utilisé pour les commandes de rotation en tangage et en roulis. L'écran est divisé à cet effet en deux zones 54, 56, destinées à chacune de ces commandes respectives, et dans chacune de ces zones apparaît une icône respective 58, 60. L'icône 58 apparaît lorsque l'utilisateur pose son doigt gauche sur la zone 54, et permet de commander l'inclinaison du drone selon ses axes de tangage et de roulis par une inclinaison correspondante du boîtier de l'appareil de télécommande avec le doigt gauche maintenu posé, assurant ainsi une translation en X ou en Y (mouvements illustrés Figure 2b), conformément aux mouvements illustrés Figure 2b.

L'icône 60 est affichée lorsque l'utilisateur pose son doigt droit sur la zone 56, et permet d'appliquer des commandes de pivotement autour de l'axe de lacet (mouvement illustré Figure 2a) par décalage vers la droite ou vers la gauche du doigt droit sur l'écran, et de façon semblable un mouvement de montée/descente par décalage vers le haut ou vers le de ce même doigt sur l'écran.

L'utilisateur peut ainsi piloter le drone de la manière expliquée plus haut par des commandes dissociées, en appliquant son doigt droit sur la moitié droite de l'écran (pivotement autour de l'axe de lacet, et commande des gaz), ou son doigt gauche sur la moitié gauche de l'écran (translations en XY).

Lorsque les deux doigts sont relâchés de l'écran, le système de pilotage automatique du drone est immédiatement activé pour imposer un passage au point fixe avec maintien immobile en cette position.

De façon caractéristique de l'invention, un nouveau mode de pilotage, désigné "pilotage en lacet combiné", est mis à la disposition de l'utilisateur lorsque celui-ci pose ses deux doigts simultanément sur les deux zones respectives 54 et 56.

Dans ce nouveau mode de pilotage, lorsque l'utilisateur penche l'appareil à gauche, le drone tournera autour d'un point imaginaire selon une trajectoire circulaire (comme illustré Figure 3), en se penchant dans le virage à la manière d'une moto.

Le virage sera d'autant plus serré, c'est-à-dire le rayon de courbure sera d'autant plus faible, que l'utilisateur inclinera son appareil : ainsi, plus l'appareil sera penché sur la gauche, plus le virage sera prononcé, plus le drone penchera vers l'intérieur du virage pour compenser la force centrifuge, et plus le drone tournera vite, sans déraper ni survirer ; inversement, si l'utilisateur penche son appareil vers la droite, le drone tournera vers la droite autour d'un point imaginaire selon un virage d'autant plus serré et à une vitesse d'autant plus importante que l'appareil sera incliné sur

6

la droite.

En relâchant le doigt de droite, le drone repasse en pilotage XY avec toutes les commandes dissociées. De la même façon, en relâchant le doigt de gauche il pourra reprendre le contrôle spécifique de l'altitude et du mouvement de lacet.

En lâchant les deux doigts, en tout état de cause le drone passe au point fixe et s'immobilise.

On voit ainsi qu'avec ce mode de pilotage en lacet combiné l'utilisateur n'a plus besoin de contrôler qu'un seul degré de liberté (l'inclinaison plus ou moins forte à droite et à gauche), ce qui rend la maîtrise de la trajectoire très aisée et intuitive.

Dans une variante, toujours dans ce mode de pilotage en lacet combiné, il est possible d'offrir en outre à l'utilisateur le contrôle de la vitesse du drone, par une inclinaison de l'appareil vers l'avant (accélération) ou vers l'arrière (ralentissement).

Il y a aura certes un degré de liberté supplémentaire, mais dans tous les cas il sera beaucoup plus aisé de négocier les virages, de les enchaîner à un rythme soutenu, etc., par rapport à un mode de pilotage traditionnel avec des commandes dissociées.

Le logiciel de pilotage du drone va en effet commander automatiquement les différents moteurs de manière à contrôler simultanément les mouvements de roulis, lacet et tangage à partir d'une simple consigne de taux de virage (virage plus ou moins serré) donnée par l'utilisateur, éventuellement complétée par une action d'accélération ou ralentissement. L'altitude du drone par rapport au sol est par ailleurs mémorisée au moment de l'entrée en virage, et des actions correctrices éventuelles sont prises pour maintenir cette valeur, c'est-à-dire que le système garantira que, quelles que soient les perturbations éventuelles, le virage se fera à altitude constante.

En entrant dans un mode de pilotage en lacet combiné, le système fixe ainsi un maximum de paramètres (vitesse, altitude), ce qui permet à l'utilisateur de se concentrer sur le contrôle du seul paramètre véritablement important, le taux de virage.

On va maintenant expliquer la manière dont ce pilotage en lacet combiné est réalisé par le système de l'invention.

Comme illustré Figure 6, il s'agit de placer et maintenir le drone sur une trajectoire de virage décrivant un cercle C de rayon R avec une rotation uniforme autour du centre O. La vitesse tangentielle $u$ devra donc être constante, la vitesse radiale $v$ nulle et la vitesse ascensionnelle w également nulle.

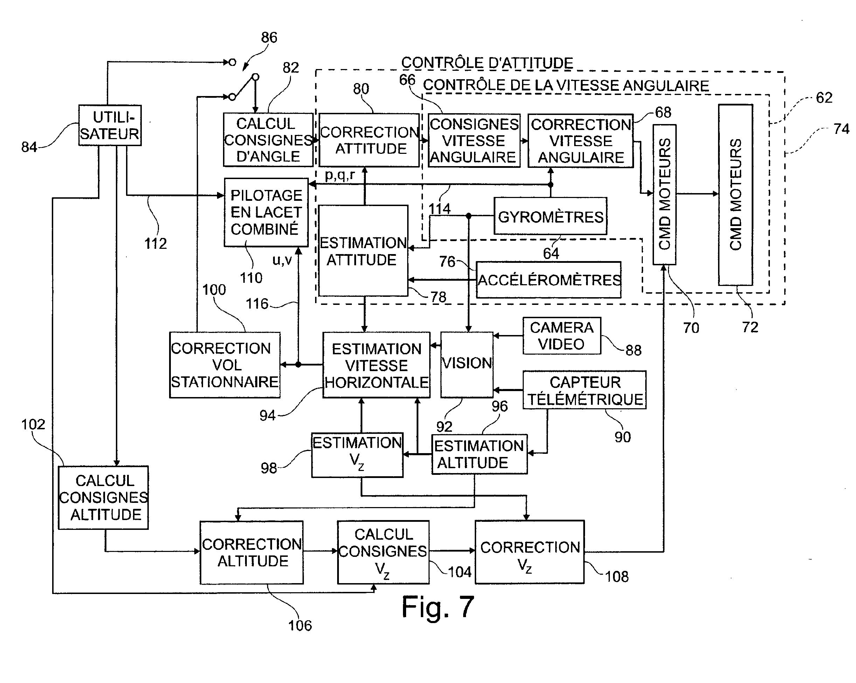

La Figure 7 est un schéma par blocs fonctionnels des différents organes de contrôle et d'asservissement ainsi que de pilotage automatique du drone. On notera toutefois que, bien que ce schéma soit présenté sous forme de circuits interconnectés, la mise en oeuvre des différentes fonctions est essentiellement logicielle, et cette représentation n'a qu'un caractère illustratif.

Le système de pilotage implique plusieurs boucles imbriquées pour le contrôle de la vitesse angulaire, de l'attitude du drone et pour la stabilisation du vol stationnaire, en plus du contrôle des variations d'altitude automatiquement ou sous l'effet d'une commande de l'utilisateur.

La boucle la plus centrale, qui est la boucle 62 de contrôle de la vitesse angulaire, utilise d'une part les signaux fournis par des gyromètres 64, et d'autre part une référence constituée par des consignes de vitesse angulaire 66, ces différentes informations étant appliquées en entrée d'un étage 68 de correction de la vitesse angulaire. Cet étage 68 pilote un étage 70 de contrôle des moteurs 72 afin de commander séparément le régime des différents moteurs pour corriger la vitesse angulaire du drone par l'action combinée des rotors entraînés par ces moteurs.

La boucle 62 de contrôle de la vitesse angulaire est imbriquée dans une boucle 74 de contrôle d'attitude, qui opère à partir des indications fournies par les gyromètres 64 et des accéléromètres 76, ces données étant appliquées en entrée d'un étage d'estimation d'attitude 78 dont la sortie est appliquée à un étage 80 de correction d'attitude de type PI (Proportionnel-Intégrateur). L'étage 80 délivre à l'étage 66 des consignes de vitesse angulaire, qui sont également fonction de consignes d'angle générées par un circuit 82 à partir soit de données générées en interne par le pilote automatique du drone, soit de commandes directement appliquées par l'utilisateur 84, la sélection de l'une ou l'autre de ces possibilités étant schématisée par le commutateur 86.

En résumé, à partir de l'erreur entre la consigne (appliquée par l'utilisateur ou bien générée en interne dans le cas d'un pilotage automatique) et la mesure de l'angle donnée par le circuit d'estimation d'attitude 78, la boucle 74 de contrôle d'attitude (circuits 64 à 80) calcule une consigne en vitesse angulaire à l'aide du correcteur PI du circuit 80. La boucle 62 de contrôle de la vitesse angulaire (circuits 64 à 72) calcule ensuite la différence entre la consigne de vitesse angulaire précédente et la vitesse angulaire effectivement mesurée par les gyromètres 64. La boucle calcule à partir de ces informations les différentes consignes de vitesse de rotation (et donc de force ascensionnelle) à envoyer aux moteurs 72 du drone pour réaliser la manoeuvre initialement demandée par l'utilisateur, ou bien planifiée par le pilote automatique.

Pour le fonctionnement autopiloté, les consignes appliquées par l'utilisateur sont remplacées par des signaux générés en interne. La caméra vidéo verticale 88 et le capteur télémétrique 90 faisant fonction d'altimètre produisent des informations appliquées à un circuit de traitement 92 recevant également les données issues des gyromètres 64 pour appliquer les corrections nécessaires à l'estimation de la vitesse horizontale, donnée par le circuit 94. Cette estimation de la vitesse horizontale peut être corrigée par une estimation de la vitesse verticale, donnée par le circuit 98 à partir d'une estimation d'altitude fournie par le circuit 96 recevant l'information du capteur télémétrique 90.

Pour le vol stationnaire, la vitesse horizontale estimée par le circuit 94 permet le calcul par le circuit 100 de consignes de vitesse qui seront ensuite appliquées en entrée de la boucle de contrôle d'attitude après transformation en consignes d'angle par le circuit 82, pour amener le drone à une vitesse nulle ou maintenir celui-ci à une configuration avec vitesse et inclinaison nulles.

En ce qui concerne les déplacements verticaux du drone, l'utilisateur 84 applique soit une consigne de vitesse ascensionnelle $V_z$, directement appliquée à un circuit 104 , soit une consigne d'altitude appliquée à un circuit 102 qui calcule à partir de l'estimation d'altitude produite par le circuit 96, une consigne de vitesse ascensionnelle au moyen du circuit 106. Dans l'un ou l'autre cas, la vitesse ascensionnelle (prescrite ou calculée) est appliquée à un circuit 108 comparant la vitesse ascensionnelle $V_z$ de consigne avec la vitesse correspondante estimée donnée par le circuit 98, et modifie en conséquence les données de commande des moteurs (circuit 70) de manière à augmenter ou réduire la vitesse de rotation simultanément sur tous les moteurs de façon à minimiser l'écart entre vitesse ascensionnelle de consigne et vitesse ascensionnelle mesurée.

De façon caractéristique de l'invention, pour permettre un mode de pilotage automatique en lacet combiné, un bloc fonctionnel supplémentaire 110 peut être activé par une commande utilisateur 112, résultant par exemple de l'appui simultané des deux doigts sur l'écran de l'appareil. Ce circuit 110 contrôle le circuit de calcul des consignes d'angle 82, à partir des paramètres 114 de vitesse angulaire $p$, $q$ et $r$ (donnés par les gyromètres 64) et 116 de vitesse horizontale $u$, $v$ (estimés par le circuit 94).

On va maintenant exposer la manière dont sont élaborées les consignes de contrôle du drone pendant cette phase de pilotage en lacet combiné. Les données de vitesse du drone sont données dans le repère $u$, $v$, $w$ illustré Figure 6, c'est-à-dire dans un repère lié au corps du drone.

On désignera par :

- $u$ et $v$ les composantes de la vitesse de translation horizontale ($u$ dans le sens principal $\Delta$ de progression du drone et $v$ dans la direction transversale), et w la vitesse de translation verticale, le tout dans un repère lié au drone (donc indépendant de l'inclinaison de celui-ci par rapport au repère terrestre de référence),
- $p$, $q$ et $r$ les vitesses angulaires suivant les trois axes respectifs de tangage 22, de roulis 24 et de lacet 26 (Figure 1), et
- $\phi$, $\theta$ et $\psi$ les angles d'Euler du drone définissant son orientation par rapport à un repère terrestre de référence (galiléen), $\phi$ et $\theta$ étant les deux angles définissant l'inclinaison par rapport à l'horizontale.

Chacune des quatre hélices $i$ du drone ($i = 1 ... 4$) exerce un couple $\Gamma i$ et une force de poussée ascensionnelle $F_i$ proportionnelle au carré de la vitesse de rotation $\omega_i$ du moteur :

$$\begin{cases} F_i = a\omega_i^2 \\ \Gamma_i = b\omega_i^2 \end{cases}$$

On applique la relation fondamentale de la dynamique, en projection dans le référentiel mobile du drone, ce qui donne les trois équations suivantes :

$$\dot{u} = (rv - qw) - g\sin\theta - Cxu$$
$$\dot{v} = (pw - ru) + g\sin\varphi\cos\theta + Cyv$$
$$\dot{w} = (qu - pv) + g\cos\varphi\cos\theta - \frac{1}{m}\sum_{i=1}^{4} a\,\omega_i^2$$

(Équations 1-3)

g étant l'accélération de la pesanteur,
$C_x$ et $C_y$ étant les coefficients de résistance à l'avancement (reflétant les forces de frottement subies par le drone) dans les deux axes horizontaux,
$a$ étant un coefficient liant la poussée et la vitesse ascensionnelle à la vitesse de rotation $\omega$, et
m étant la masse du drone.

On applique de la même façon le théorème du moment dynamique au système, toujours en projection dans le référentiel mobile, ce qui conduit aux trois équations suivantes :

$$I_x\dot{p} + qr(I_z - I_y) = la(\omega_2^2 - \omega_4^2)$$
$$I_y\dot{q} + pr(I_x - I_z) = la(\omega_1^2 - \omega_3^2)$$
$$I_z\dot{r} + pq(I_y - I_x) = b(\omega_1^2 - \omega_2^2 + \omega_3^2 - \omega_4^2)$$

(Équations 4-6)

$I_x$, $I_y$ et $I_z$ étant des paramètres représentatifs du coefficient d'inertie du drone dans les trois axes, et / étant la distance séparant le moteur du centre de gravité M.

Dans ces équations, le premier terme du membre de gauche correspond au moment dynamique du système, le second terme représente la contribution au moment dynamique des forces de Coriolis, et le membre de droite correspond aux moments exercés par les forces ascensionnelles $F_i$ et les couples $\Gamma_i$ créés par les hélices de chacun des rotors.

Enfin, on démontre la relation suivante faisant intervenir les trois angles d'Euler $\phi$, $\theta$ et $\psi$ :

$$\dot{\varphi} = p + (q\sin\varphi + r\cos\varphi)\tan\theta$$
$$\dot{\theta} = q\cos\varphi - r\sin\varphi$$
$$\dot{\psi} = \frac{q\sin\varphi + r\cos\varphi}{\cos\theta}$$

(Équations 7-9)

Le comportement du système est donc décrit au total par neuf équations à neuf inconnues (Équations 1-9 ci-dessus).

On va maintenant exposer plus précisément la manière dont le circuit élabore les consignes de pilotage pour réaliser le mouvement de virage en lacet combiné.

Comme on l'a indiqué plus haut, l'utilisateur peut appliquer les commandes suivantes :

- une commande en inclinant le dispositif sur le côté vers la droite ou vers la gauche, interprétée comme une commande de "taux de virage", le virage à imprimer au drone étant d'autant plus serré que l'inclinaison est forte ; et
- (facultativement) une commande en inclinant le dispositif vers l'avant ou vers l'arrière, interprétée comme une commande d'augmentation ou de réduction de la vitesse du drone (vitesse tangentielle par rapport au cercle décrit par le drone dans le virage).

On considèrera un intervalle de temps élémentaire dont la durée est suffisamment réduite pour que ces commandes de taux de virage et/ou de vitesse puissent être considérées comme constantes (valeurs de consigne fixes).

Dans un virage en lacet combiné, l'arc de trajectoire décrit par le drone pendant cet intervalle de temps élémentaire peut être assimilé à une fraction d'un cercle C de rayon R et de centre imaginaire O (Figure 6), situé dans un plan perpendiculaire au plan du sol et décrit à vitesse constante. Le mouvement du drone est donc un mouvement de rotation circulaire uniforme.

On utilisera les deux relations classiques suivantes, aisément démontrables pour ce type de mouvement :

$$u_{plan} = \dot{\psi} * R$$
$$a_{y_{plan}} = \frac{v_{plan}^2}{R}$$

(Équations 10-11)

$u_{plan}$ étant la vitesse tangentielle,

$a_{yplan}$ étant l'accélération radiale,

$\psi$ étant la vitesse angulaire, ou taux de virage (c'est-à-dire la consigne de pilotage donnée par l'utilisateur en inclinaison gauche/droite de l'appareil de télécommande),

R étant le rayon du cercle décrit par le drone en mouvement circulaire uniforme, et

$v_{plan}$ étant la vitesse radiale.

Pour définir le mouvement du drone dans le virage, on considérera un référentiel galiléen R centré en 0, et un référentiel non galiléen R' centré en M (le centre de gravité du drone) dont la rotation autour de R est donnée par le vecteur $\vec{\Omega}_{\left(\frac{R'}{R}\right)}$.

Le drone sera assimilé à un point M mobile de masse $m$ subissant des forces de résultante $\vec{F}$.

En notant $\mathbf{a}_a$ l'accélération de M dans (R), $\mathbf{a}_r$ l'accélération de M dans (R'), $\mathbf{a}_e$ l'accélération d'entrainement et enfin $\mathbf{a}_c$ l'accélération de Coriolis, d'après la loi de composition des mouvements on a :

$$\vec{a}_a = \vec{a}_r + \vec{a}_e + \vec{a}_c$$

Si l'on note $\vec{F}_{ie} = -m * \vec{a}_e$ la force d'inertie d'entrainement, c'est-à-dire la force centrifuge dans le cas présent, on a de façon générale :

$$\vec{F}_{ie} = -m * \vec{a}_e = -m * \left( \vec{a(O)}_{(R)} + \left( \frac{d\vec{\Omega}_{\left(\frac{R'}{R}\right)}}{dt} \right)_{(R)} + \vec{\Omega}_{\left(\frac{R'}{R}\right)} \wedge \left( \vec{\Omega}_{\left(\frac{R'}{R}\right)} \wedge \vec{OM} \right) \right)$$

Pour un mouvement de rotation circulaire uniforme $\vec{\Omega}_{\left(\frac{R'}{R}\right)} = Constante$ (rotation uniforme) et $\vec{a(O)}_{(R)} = \vec{0}$, d'où :

$$\left( \frac{d\vec{\Omega}_{\left(\frac{R'}{R}\right)}}{dt} \right)_{(R)} = \vec{0} \, ,$$

On obtient après calcul la force d'inertie d'entrainement $\vec{F}_{ie}$ (dans une trajectoire circulaire, la force d'inertie d'entrainement tend à écarter le drone de sa trajectoire) :

$$\vec{F}_{ie} = -m * \Omega^2 * \vec{OM}$$

On a vu plus haut (Équation 2) que :

$$\dot{v} = (pw - ru) + g\sin\varphi\cos\theta + Cyv$$

On va formuler à ce stade deux hypothèses :

1°) le drone évolue dans un plan, donc $w = \mathbf{0}$ ; et

2°) $\theta < 30°$ ; comme de plus on sature le couple ($\theta$ $\varphi$) à la valeur de l'angle maximal dans le virage, en pratique $\theta < 20°$. On pourra donc faire l'approximation des petits angles, à savoir $\cos\theta = 1$ et $\sin\varphi = \varphi$.

L'équation simplifiée dans le repère du drone devient :

$$\dot{v} = (-r * u) + g * \varphi + Cyv$$

On va opérer une projection dans le plan du virage, avec la matrice suivante de passage du repère *body* (repère R' du corps du drone) au repère *world* (projection dans un repère R" parallèlement à R' mais avec une orientation différente) :

$$R_{body}^{world} = \begin{bmatrix} \cos(\theta) & \sin(\theta)\cos(\varphi) & \sin(\theta)\cos(\varphi) & 0 \\ 0 & \cos(\varphi) & -\sin(\varphi) & 0 \\ -\sin(\theta) & \cos(\theta)\sin(\varphi) & \cos(\theta)\cos(\varphi) & 0 \\ 0 & 0 & 0 & 1 \end{bmatrix}$$

On simplifie l'équation dans les conditions du virage puis on projette dans le plan du virage, ce qui donne :

$$a_{y_{plan}} = \cos\varphi * \dot{v}_b$$

$$v_{plan} = \cos\varphi * v_b$$

$$u_{plan} = \cos\theta * u_b$$

$$a_{y_{plan}} = \left(-r * u_{plan}\right) + g * \varphi + Cy' * v_{plan}$$

On veut que la vitesse radiale $v_{plan}$ soit nulle dans le virage, d'où l'équation finale suivante qui sera utilisée pour le contrôle :

$$a_{y_{plan}} = \left(-r * u_{plan}\right) + g * \varphi$$

(Équation 12)

Cette relation donne l'accélération subie par le drone dans le plan du virage - accélération que l'on cherche à annuler -, le premier terme correspondant à la force d'inertie d'entrainement et le second terme étant relatif à la projection de la force de gravité dans le bon repère.

On sait que, pour le mouvement souhaité :

$$a_{y\_plan} = -\frac{u_{plan}^2}{R}$$

La grandeur sur laquelle on va agir (valeur de consigne pour le pilotage) est l'angle $\varphi$ de roulis du drone.

En effet, dans l'Équation 12 ci-dessus on voit que par action sur cet angle on peut fixer la valeur de l'accélération du drone dans le plan du virage à cette valeur de référence. On calcule donc directement $\varphi$ tel que:

$$\varphi = \frac{1}{g}\left(-\frac{u_{plan}^{2}}{R} + r * u_{plan}\right)$$

(Équation 13)

Pour obtenir le virage souhaité, on calcule l'angle de roulis suivant cette Équation 13, à partir des données délivrées par les capteurs du drone. Les inclinaisons appliquées par l'utilisateur à l'appareil de télécommande sont interprétées et traduites en consignes de pilotage correspondantes.

Sur une trajectoire de mouvement circulaire uniforme autour d'un centre fixe, on a :

$$V = \dot{\psi} * R \ ,$$

avec :

$V$: vitesse tangentielle (selon l'inclinaison avant/arrière de l'appareil),

$\dot{\psi}$ : vitesse angulaire, ou taux de virage (selon l'inclinaison gauche/droite de l'appareil), et

$R$ : rayon du cercle.

La commande de taux de virage donnée par l'utilisateur (inclinaison gauche/droite) est convertie en une commande de vitesse angulaire de rotation autour de l'axe, par application de l'Équation 13. Pour déterminer le rayon r, on a d'après l'Équation 9 :

$$\dot{\psi} = \frac{q\,sin\varphi + r\,cos\varphi}{cos\theta} \cong \frac{r * cos\varphi}{cos\theta}$$

Soit :

$$r \cong \frac{\dot{\psi} * cos\theta}{cos\varphi}$$

(Équation 14)

La commande de vitesse (inclinaison avant/arrière) est, quant à elle, directement traduite en consigne de vitesse d'avancement du drone.

Par ces deux commandes, l'utilisateur impose le taux de virage du drone et sa vitesse d'avancement. Le rayon du virage étant déterminé par l'Équation 14, le calculateur du drone détermine les angles de tangage, roulis et lacet du drone satisfaisant ces deux commandes. Concrètement, le rayon de virage, qui est fonction de la vitesse tangentielle du drone et de son taux de virage, est déterminé à chaque période d'échantillonnage, avec saturation de la valeur de la commande en vitesse angulaire autour de l'axe de façon à ce que le drone ne puisse pas décrire un cercle avec un rayon inférieur à une valeur minimale (70 cm en pratique).

Avantageusement, il est possible de prévoir une fonctionnalité complémentaire du lacet combiné, permettant de faire en sorte que le drone réalise un demi-tour complet, moyennant une commande spécifique appliquée par l'utilisateur. La vitesse et l'altitude au moment de l'application de la commande sont conservées, le taux de virage est fixé par exemple au rayon minimum acceptable compte tenu de la vitesse du drone, et la manoeuvre s'arrête quand le drone a tourné de 180° par rapport à son orientation initiale (c'est-à-dire celle qu'il avait à l'instant où la manoeuvre a été déclenchée).

On notera que, dans l'exemple décrit, le calcul de la commande en taux de virage à appliquer au drone est effectué directement par le calculateur du drone, l'appareil de télécommande ne transmettant qu'une donnée d'inclinaison plus ou moins importante. Toutefois ce calcul peut être indifféremment effectué par le drone ou l'appareil de télécommande.

**Revendications**

1. Un procédé de pilotage d'un drone (10) à voilure tournante, comprenant les étapes suivantes :

   a) par un appareil de télécommande (16), production d'une commande de virage selon une trajectoire curviligne,
   b) par le drone, i) réception de ladite commande et ii) acquisition de mesures instantanées des composantes de la vitesse linéaire, des angles d'inclinaison et des vitesses angulaires du drone ; et
   c) à partir de la commande reçue et des mesures acquises à l'étape b), génération de valeurs de consigne d'une boucle (64-80) de contrôle du drone, ces valeurs de consigne contrôlant la vitesse linéaire horizontale et l'inclinaison du drone par rapport un repère lié au sol de manière à faire parcourir au drone ladite trajectoire curviligne (C) avec une vitesse tangentielle ($u$) prédéterminée,

   ce procédé étant **caractérisé en ce que** :

   - le drone est un drone de type quadricoptère à rotors multiples coplanaires entraînés par des moteurs respectifs (72) ;
   - la boucle de contrôle (64-80) contrôle la vitesse linéaire horizontale et l'inclinaison du drone par action différenciée sur la vitesse de rotation desdits moteurs (72) ; et
   - ladite commande est une commande de taux de virage comprenant un paramètre de sens du virage, à droite ou à gauche, et un paramètre définissant une consigne de rayon de courbure instantané pour ce virage.

2. Le procédé de la revendication 1, dans lequel ladite trajectoire curviligne (C) est une trajectoire circulaire, parcourue à rayon de courbure (R) constant.

3. Le procédé de la revendication 1, dans lequel ladite vitesse tangentielle (u) prédéterminée est une vitesse constante.

4. Le procédé de la revendication 1, dans lequel les valeurs de consigne générées à l'étape c) contrôlent les moteurs du drone de manière à, en outre, maintenir constante l'altitude du drone par rapport au sol.

5. Le procédé de la revendication 1, dans lequel les valeurs de consigne générées à l'étape c) contrôlent la vitesse linéaire horizontale et l'inclinaison du drone de manière à, en outre, maintenir une vitesse radiale ($v$) nulle du drone par rapport à la trajectoire circulaire, de façon à compenser tout dérapage ou survirage du drone lorsqu'il parcourt cette trajectoire.

6. Le procédé de la revendication 1, dans lequel à l'étape a) la commande de virage selon une trajectoire curviligne est produite par ledit appareil de télécommande (16) qui comprend :

   - un écran tactile (18) ;
   - des moyens aptes à i) détecter un contact d'au moins un doigt (20) d'un utilisateur sur la surface de l'écran, ii) déterminer la position du ou des points de contact, et iii) produire des commandes de pilotage correspondantes, incluant ladite commande de virage selon une trajectoire curviligne ; et
   - des moyens de transmission sans fil de données, aptes à émettre des commandes à destination du drone.

7. Le procédé de la revendication 6, dans lequel dans lequel la production de la commande de virage selon une trajectoire curviligne est déclenchée sur détection du contact simultané de deux doigts de l'utilisateur sur l'écran tactile.

8. Le procédé de la revendication 7, dans lequel ladite commande de virage selon une trajectoire curviligne est produite pendant toute la durée dudit contact simultané des deux doigts, jusqu'à détection d'une perte de ce contact simultané.

9. Le procédé de la revendication 6, dans lequel dans lequel, l'appareil de télécommande comprenant en outre un détecteur d'inclinaisons selon l'un et/ou l'autre de ses axes de tangage (32) et/ou de roulis (34), la commande de virage selon une trajectoire curviligne est produite i) en fonction du sens de l'inclinaison, à droite ou à gauche, de l'appareil par rapport à son axe de roulis (34), pour déterminer ledit paramètre de sens du virage à droite ou à gauche, et ii) en fonction de l'amplitude de l'inclinaison de l'appareil par rapport audit axe de roulis (34), pour déterminer ledit paramètre définissant le rayon de courbure (R) du virage.

10. Le procédé de la revendication 9, dans lequel la commande de virage est produite également en fonction de l'amplitude de l'inclinaison de l'appareil par rapport à son axe de tangage (32), pour déterminer un paramètre de vitesse tangentielle (u).

11. Le procédé de la revendication 1, comprenant en outre le cas échéant la limitation du rayon de courbure (R) de la trajectoire à une valeur minimale prédéterminée.

12. Le procédé de la revendication 1, comprenant en outre à l'étape a) la production d'une commande de demi-tour du drone, et dans lequel à l'étape c) il est mis fin au parcours du drone suivant la trajectoire curviligne lorsque les mesures acquises à l'étape b) indiquent une rotation du drone à 180° autour de son axe de lacet.

13. Un logiciel, téléchargeable pour partie dans une mémoire numérique d'un drone à voilure tournante et pour partie dans celle d'un appareil de télécommande, comprenant des instructions qui, lorsqu'elles sont exécutées, mettent en oeuvre un procédé selon l'une des revendications 1 à 11 pour le pilotage du drone en virage selon une trajectoire curviligne.

## Patentansprüche

1. Verfahren zum Steuern einer Drohne (10) mit Drehflügeln, das die folgenden Schritte enthält:

a) durch ein Fernsteuerungsgerät (16), Erzeugung einer Kurvenflugsteuerung gemäß einer krummlinigen Flugbahn,
b) durch die Drohne, i) Empfang der Steuerung und ii) Erfassung von Augenblicksmessungen der Komponenten der Lineargeschwindigkeit, der Neigungswinkel und der Winkelgeschwindigkeiten der Drohne; und
c) ausgehend von der empfangenen Steuerung und den im Schritt b) erfassten Messwerten, Erzeugung von Sollwerten eines Regelkreises (64-80) der Drohne, wobei diese Sollwerte die horizontale Lineargeschwindigkeit und die Neigung der Drohne bezüglich eines mit der Erde verbundenen Bezugssystems regeln, damit die Drohne die krummlinige Flugbahn (C) mit einer vorbestimmten Tangentialgeschwindigkeit (u) durchfliegt,

wobei dieses Verfahren **dadurch gekennzeichnet ist, dass**:

- die Drohne eine Drohne von der Art Quadrocopter mit mehreren koplanaren Rotoren ist, die von jeweiligen Motoren (72) angetrieben werden;
- der Regelkreis (64-80) die horizontale Lineargeschwindigkeit und die Neigung der Drohne durch differenzierte Einwirkung auf die Drehgeschwindigkeit der Motoren (72) regelt; und
- die Steuerung eine Kurvenflugratensteuerung ist, die einen Richtungsparameter des Kurvenflugs nach rechts oder nach links und einen Parameter enthält, der einen augenblicklichen Krümmungsradiussollwert für diesen Kurvenflug definiert.

2. Verfahren nach Anspruch 1, wobei die krummlinige Flugbahn (C) eine Kreisbahn ist, die mit konstantem Krümmungsradius (R) durchflogen wird.

3. Verfahren nach Anspruch 1, wobei die vorbestimmte Tangentialgeschwindigkeit (u) eine konstante Geschwindigkeit ist.

4. Verfahren nach Anspruch 1, wobei die im Schritt c) erzeugten Sollwerte die Motoren der Drohne so regeln, dass außerdem die Höhe der Drohne bezüglich des Bodens konstant gehalten wird.

5. Verfahren nach Anspruch 1, wobei die im Schritt c) erzeugten Sollwerte die horizontale Lineargeschwindigkeit und die Neigung der Drohne so regeln, dass außerdem eine Radialgeschwindigkeit (v) Null der Drohne bezüglich der Kreisbahn aufrechterhalten wird, um jeden Schiebeflug oder jede Übersteuerung der Drohne zu kompensieren, wenn sie diese Bahn durchfliegt.

6. Verfahren nach Anspruch 1, wobei im Schritt a) die Kurvenflugsteuerung gemäß einer krummlinigen Flugbahn vom Fernsteuerungsgerät (16) erzeugt wird, das enthält:

- einen berührungsempfindlichen Bildschirm (18);
- Einrichtungen, die i) einen Kontakt mindestens eines Fingers (20) eines Benutzers auf der Oberfläche des Bildschirms erfassen, ii) die Position des oder der Kontaktpunkte bestimmen, und iii) entsprechende Steuerungen erzeugen können, einschließlich der Kurvenflugsteuerung gemäß einer krummlinigen Flugbahn; und
- drahtlose Datenübertragungseinrichtungen, die Steuerungen an die Drohne senden können.

**7.** Verfahren nach Anspruch 6, wobei die Erzeugung der Kurvenflugsteuerung gemäß einer krummlinigen Flugbahn bei Erfassung des gleichzeitigen Kontakts von zwei Fingern des Benutzers auf dem berührungsempfindlichen Bildschirm ausgelöst wird.

**8.** Verfahren nach Anspruch 7, wobei die Kurvenflugsteuerung gemäß einer krummlinigen Flugbahn während der ganzen Dauer des gleichzeitigen Kontakts der zwei Finger bis zur Erfassung eines Verlusts dieses gleichzeitigen Kontakts erzeugt wird.

**9.** Verfahren nach Anspruch 6, wobei, wenn das Fernsteuerungsgerät außerdem einen Detektor von Neigungen gemäß der einen und/oder anderen seiner Nickachse (32) und/oder Rollachse (34) enthält, die Kurvenflugsteuerung gemäß einer krummlinigen Flugbahn i) abhängig von der Neigungsrichtung des Geräts nach rechts oder nach links bezüglich seiner Rollachse (34), um den Richtungsparameter des Kurvenflugs nach rechts oder nach links zu bestimmen, und ii) abhängig von der Amplitude der Neigung des Geräts bezüglich der Rollachse (34) erzeugt wird, um den Parameter zu bestimmen, der den Krümmungsradius (R) des Kurvenflugs definiert.

**10.** Verfahren nach Anspruch 9, wobei die Kurvenflugsteuerung ebenfalls abhängig von der Amplitude der Neigung des Geräts bezüglich seiner Nickachse (32) erzeugt wird, um einen Parameter der Tangentialgeschwindigkeit (u) zu bestimmen.

**11.** Verfahren nach Anspruch 1, das außerdem ggf. die Begrenzung des Krümmungsradius (R) der Flugbahn auf einen vorbestimmten minimalen Wert enthält.

**12.** Verfahren nach Anspruch 1, das außerdem im Schritt a) die Erzeugung einer Wendesteuerung der Drohne enthält, und wobei im Schritt c) die Strecke der Drohne gemäß der krummlinigen Flugbahn beendet wird, wenn die im Schritt b) erfassten Messwerte eine Drehung der Drohne um 180° um ihre Gierachse anzeigen.

**13.** Software, die zum Teil in einen digitalen Speicher einer Drohne mit Drehflügeln und zum Teil in denjenigen eines Fernsteuerungsgeräts heruntergeladen werden kann, welche Anweisungen enthält, die, wenn sie ausgeführt werden, ein Verfahren nach einem der Ansprüche 1 bis 11 zur Kurvenflugsteuerung der Drohne gemäß einer krummlinigen Flugbahn durchführen.

**Claims**

**1.** A method for piloting a rotary-wing drone (10), comprising the following steps:

a) by a remote-control apparatus (16), producing a command of curvilinear-trajectory turn,
b) by the drone, i) receiving said command and ii) acquiring instantaneous measurements of the components of the linear speed, the inclination angles and the angular speeds of the drone; and
c) from the command received and the measurements acquired at step b), generating set values of a control loop (64-80) of the drone, these set values controlling the horizontal linear speed and the inclination of the drone with respect to a landmark linked to the ground, so as to make the drone travel along said curvilinear trajectory (C) with a predetermined tangential speed ($u$), the method being **characterized in that**:

- the drone is a drone of the quadricopter type, with multiple coplanar rotors driven by respective motors (72) ;
- the control loop (64-80) controls the horizontal linear speed and the inclination of the drone by acting in a differentiated manner on the rotational speeds of said motors (72) ; and
- said command is a rate-of-turn command comprising a right or left turn direction parameter and a parameter defining a set value of instantaneous radius of curvature for this turn.

**2.** The method of claim 1, wherein said curvilinear trajectory (C) is a circular trajectory, travelled at a constant radius of curvature (R).

**3.** The method of claim 1, wherein said predetermined tangential speed ($u$) is a constant speed.

4. The method of claim 1, wherein the set values generated at step c) control the motors of the drone in such a manner to, further, maintain constant the altitude of the drone with respect to the ground.

5. The method of claim 1, wherein the set values generated at step c) control the horizontal linear speed and the inclination of the drone in such a manner to, further, maintain a zero radial speed ($v$) of the drone with respect to the circular trajectory, in order to compensate for any side slip or oversteering of the drone when the latter travels along this trajectory.

6. The method of claim 1, wherein, at step a), the command of curvilinear-trajectory turn is produced by said remote-control apparatus (16) that comprises:

   - a touchscreen (18),
   - means operable to i) detect a contact of at least one finger (20) of a user on the surface of the screen, ii) determine the position of the contact point(s), and iii) produce corresponding piloting commands, including said command of curvilinear-trajectory turn ; and
   - means for wireless data transmission, operable to emit commands to the drone.

7. The method of claim 6, wherein the production of the command of curvilinear-trajectory turn is triggered upon detection of the simultaneous contact of two fingers of the user on the touchscreen.

8. The method of claim 7, wherein said command of curvilinear-trajectory turn is produced during all the duration of said simultaneous contact of the two fingers, until a loss of this simultaneous contact is detected.

9. The method of claim 6, wherein, the remote-control apparatus further including a detector of inclinations according to one and/or the other of its pitch (32) and/or roll (34) axes, the command of curvilinear-trajectory turn is produced i) as a function of the right or left inclination direction of the apparatus with respect to its roll axis (34), to determine said right or left turn direction parameter, and ii) as a function of the amplitude of the apparatus inclination with respect to said roll axis (34), to determine said parameter defining the radius of curvature (R) of the turn.

10. The method of claim 9, wherein the turn command is also produced as a function of the amplitude of apparatus inclination with respect to its pitch axis (32), to determine a tangential speed parameter ($u$).

11. The method of claim 1, further comprising, if need be, the limitation of the radius of curvature (R) of the trajectory to a predetermined minimal value.

12. The method of claim 1, further comprising, at step a), the production of a drone U-turn command, and wherein, at step c), the travel of the drone along the curvilinear trajectory is ended when the measurements acquired a step b) indicate a rotation of the drone by 180° about its yaw axis.

13. A software, downloadable partially in a digital memory of a rotary-wing drone and partially in that of a remote-control apparatus, comprising instructions that, when they are executed, implement a method according to one of claims 1 to 11 for piloting the drone so that it turns along a curvilinear trajectory.

Fig. 1

Fig. 2a

Fig. 2b

Fig. 3

Fig. 4

Fig. 5

Fig. 6

CONTRÔLE D'ATTITUDE

CONTRÔLE DE LA VITESSE ANGULAIRE

UTILISATEUR

CALCUL CONSIGNES D'ANGLE

CORRECTION ATTITUDE

CONSIGNES VITESSE ANGULAIRE

CORRECTION VITESSE ANGULAIRE

CMD MOTEURS

CMD MOTEURS

PILOTAGE EN LACET COMBINÉ

ESTIMATION ATTITUDE

GYROMÈTRES

ACCÉLÉROMÈTRES

p,q,r

u,v

CORRECTION VOL STATIONNAIRE

ESTIMATION VITESSE HORIZONTALE

VISION

CAMERA VIDEO

CAPTEUR TÉLÉMÉTRIQUE

CALCUL CONSIGNES ALTITUDE

ESTIMATION $V_z$

ESTIMATION ALTITUDE

CORRECTION ALTITUDE

CALCUL CONSIGNES $V_z$

CORRECTION $V_z$

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- WO 2008056049 A1, Parrot
- JP 2006312344 A
- US 2004245378 A1
- WO 2009109711 A2
- FR 2915569 A1